(19)

**Europäisches Patentamt**
**European Patent Office**
**Office européen des brevets**

(11) **EP 4 376 266 B1**

(12) **EUROPEAN PATENT SPECIFICATION**

(45) Date of publication and mention
of the grant of the patent:
**29.04.2026 Bulletin 2026/18**

(21) Application number: **22386083.4**

(22) Date of filing: **24.11.2022**

(51) International Patent Classification (IPC):
**H02K 3/14** *(2006.01)*     **H02K 55/02** *(2006.01)*
**H02K 5/20** *(2006.01)*

(52) Cooperative Patent Classification (CPC):
**H02K 55/02; H02K 3/14; H02K 5/20**

(54) **ELECTRIC MACHINE HAVING CRYOCOOLED ARMATURE LITZ WINDINGS**

ELEKTRISCHE MACHINE MIT KRYOGEKÜHLTER ANKERLITZENWICKLUNG

MACHINE ÉLECTRIQUE À ENROULEMENTS LITZ D'INDUIT CRYORÉFRIGÉRÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**29.05.2024 Bulletin 2024/22**

(73) Proprietors:
• **GKN Aerospace Services Limited**
  **Shirley, Solihull B90 8BG (GB)**
• **The University of Manchester**
  **Manchester M13 9PL (GB)**

(72) Inventors:
• **Climente Alarcon, Vicente**
  **Solihull, B90 8BG (GB)**

• **Zhao, Chuanli**
  **Solihull, B90 8BG (GB)**
• **Manolopoulos, Charalampos**
  **Solihull, B90 8BG (GB)**
• **Harrison, Stephen**
  **Solihull, B90 8BG (GB)**
• **Iacchetti, Matteo**
  **Manchester, M13 9PL (GB)**
• **Smith, Sandy**
  **Manchester, M13 9PL (GB)**

(74) Representative: **D Young & Co LLP**
  **3 Noble Street**
  **London EC2V 7BQ (GB)**

(56) References cited:
**EP-A1- 3 627 674     WO-A1-2022/196193
GB-A- 2 587 556**

## Description

### Technical Field

The present invention is concerned with aircraft propulsion systems and specifically to aircraft propulsion arrangements, and electric machines capable of providing extremely high efficiencies. In particular, the use of cryogenic sources and electrical energy enables the highly efficient system disclosed herein to provide thrust for aircraft in a manner that avoids use of typical combustible fuels that can lead to the release of harmful greenhouse gases.

Although hydrogen fuels and hydrogen synthetic fuels (synfuels) are occasionally used in aircraft, this is not regularly the case in larger aircraft and not at all in passenger aircraft. This is by virtue of the specific power that can be provided by gas turbines in comparison to that provided by hydrogen systems. Gas turbines can achieve around 5 to 8 kW/kg for a typical system, while hydrogen systems can achieve around 1 kW/kg. As such, hydrogen is a reasonable, and an environmentally conscious, choice for smaller aircraft but all but entirely prevented from use in commercial, larger systems.

Fuel cells using hydrogen are under investigation and recent work has indicated that the specific power value for such systems may optimistically reach 2 kW/kg in the next 5 to 10 years. Some other work has noted that there may be an absolute maximum value of around 1.8 kW/kg. As such, it appears that these systems could not be feasible for use in commercial, passenger aircraft without significant economic drawbacks.

As such, there is a need for greater power to be provided over existing systems to enable greener solutions to flight. The present invention looks to provide improvements in this area.

There are developments that can be made in this field and advantages that can be obtained from these developments. The inventors of an invention described herein have however created a superior electric machine arrangement which has a wide range of previously unavailable advantages as described herein.

EP 3627674 discloses an electric machine with a fully non-magnetic core with superconducting windings operated at superconducting temperatures.

### Summary of the Invention

Aspects of the invention are set out in the accompanying claims.

Viewed from a first aspect there is provided an electric machine comprising: a stator comprising a magnetic core; a rotor; an armature arrangement; and, a low temperature source arranged to provide a low temperature to the armature arrangement, wherein the armature arrangement comprises a plurality of Litz wires, wherein during operation the armature arrangement provides a current density of more than 25 A/mm$^2$.

The current density referred to above may be an RMS current density of more than 25 A/mm$^2$. During operation of the electric machine, the armature arrangement may provide an RMS current density of more than 25 A/mm$^2$; an RMS current density of more than 30 A/mm$^2$; an RMS current density of more than 35 A/mm$^2$; an RMS current density of more than 40 A/mm$^2$; or an RMS current density of more than 50 A/mm$^2$.

The electric machine disclosed herein provides a far greater current density than is presently provided by standard electric machines. The use of the magnetic core stator and the cryogen source to provide cryogen to the armature arrangement provides a highly effective and highly efficient electromagnetic arrangement that allows a significantly higher current density to be handled by the armature than has previously been used.

The higher current density enables a high electrical load to be carried by the armature while simultaneously maintaining extremely low electrical loss. In turn this means the electrical machine has a more efficient power output and can provide greater thrust for a vehicle. When combined, each advancement herein leads to an electric machine that is viable for use as the main propulsion system for an aircraft while reducing reliance on fossil fuels.

Such an electric machine is therefore an attractive proposition for use in green vehicles where previous machines have not provided sufficient thrust. In a particular example, the electric machine disclosed herein is particularly effective for use in an aircraft with low impact emissions.

According to the invention, the low temperature source is a cryogen source arranged to provide a cryogen to the armature arrangement. Cryogens are suitable for providing low temperatures, however cryogens are not required for the advantages outlined herein. A cooler or cryocooler may also be used to provide a low temperature to the armature as well as other elements in the electric machine.

In an example, the cryogen source is a source of at least one of hydrogen, neon, helium or nitrogen. Such cryogens are advantageous as having thermal properties such that temperatures of below 60 K can be achieved for the cryogens. In practice, a wide range of temperatures can be provided by use of cryogens. These cryogens can be used to provide a low temperature (60 K and below) to the armature arrangement. Such cooling provides electrical efficiencies that assist in the delivery of extremely high current densities for the armature.

In an example, the cryogen is at a temperature of below 77 Kelvin arranged to maintain the armature arrangement at a temperature of below 77 Kelvin. Such temperatures have been found to be highly effective for the arrangement disclosed herein. Specifically, such temperatures are able to access highly conducting physical characteristics of various materials which may be used in the arrangements to assist in delivery of extremely high current densities for the armature.

In an example, each of the plurality of Litz wires comprises a plurality of Litz strands, the number of Litz strands being between 50 to 5000 for each of the plurality of Litz wires. Litz wires provide many filaments in bundles that are highly resistant to the production of Eddy currents and therefore reduce losses in arrangements such as the arrangement disclosed herein. For the arrangements disclosed herein, 50 to 5000 was found to be effective for provision of high current densities; further still, 750 to 1250 Litz strands was found to be particularly effective.

In an example, the Litz strands have a diameter in a diameter range of between 0.05 mm to 1 mm. In an example, the plurality of Litz wires has a resistivity of $1 \times 10^{-9}$ $\Omega$m or below. Such a diameter range and resistivity corresponds to an operating frequency of around 150 Hz (with a resistivity of around $1 \times 10^{-9}$ $\Omega$m) to an operating frequency of around 10 kHz (with a resistivity of around $2 \times 10^{-10}$ $\Omega$m). This therefore is related to a reasonable range of applications for electric machines and in particular is effective for use in aircraft propulsion machines - operating frequencies of below 150 Hz are not likely to be sufficient for aircraft propulsion. Furthermore, the range for resistivity listed has been found to be highly effective as being in a hyperconductive region. The above range of operating frequencies can be obtained using temperatures between around 40 K to around 60 K.

The diameter of the Litz strands is chosen such that the skin effect is substantially avoided, as the diameter is less than the skin depth. In a specific example, a 1 mm diameter Litz strand at around 60 Kelvin, with a resistivity of around $1 \times 10^{-9}$ $\Omega$m, corresponds to an operating frequency of around 150 Hz; a 0.05 mm diameter Litz strand at around 35 to 40 Kelvin, with a resistivity of $2 \times 10^{-10}$ $\Omega$m, corresponds to an operating frequency of around 10 kHz.

As mentioned above, operating frequencies of below 150 Hz are not likely to be sufficient for aircraft propulsion - as such, 1 mm is a particularly effective diameter as higher diameters have been found to introduce skin effect losses or require lowering the operating frequency below 150 Hz. As such, the present invention may use effective diameter and temperature ranges to provide highly efficient operating frequencies for flight.

A diameter of about 0.05 mm may be chosen as production of such wires is presently routine to construct; smaller diameters (and correspondingly higher operating frequencies) would be suitable in the event they could be routinely manufactured. Thus, temperatures below 35 to 40 K and correspondingly lower resistivity will be suitable without introducing undesired skin effect losses. Factors to offset include the increasingly expensive cryogen budget as temperature is further reduced for the thinner wires, and the manufacture of said thinner wires. Therefore, these diameters are related to a reasonable range of applications for electric machines and in particular is effective for use in aircraft propulsion machines.

The above temperature values are suitable as they can be obtained by cryogens. A resistivity of around $1 \times 10^{-9}$ $\Omega$m may be obtained at around 60 K for higher purity aluminium and copper. A resistivity of around $2 \times 10^{-10}$ $\Omega$m may be obtained at around 40 K for higher purity aluminium. A temperature region around these values may be broadly referred to as the "hyperconducting region". This region of temperatures (and corresponding resistivities) has been found to be highly effective for electrical efficiency in particular when used in the arrangement disclosed herein.

While industry-standard aluminium typically has a purity of around 99.5%, the present invention preferably uses higher purity aluminium of at least 99.99%. In the hyperconducting region, high purity aluminium has a superior resistivity compared to its industry-standard counterpart. As such, and in conjunction with the aforementioned Litz strand diameters, the present electric machine provides vastly superior current densities over previously disclosed machines. Similarly, while industry-standard copper has a purity of around 99.9%, the present invention preferably uses higher purity copper of at least 99.99%, having similarly superior resistivity over its industry-standard counterpart.

The arrangement herein may utilise a particularly effective temperature region referred to as a hyperconductive region. Litz wires have superior conductivity over their conventional counterparts at hyperconductive temperature regions. Litz wires in the hyperconductive temperature range have significantly lower resistivity compared to conventional temperatures above the hyperconductive temperature region. As such, a hyperconductive armature arrangement comprising Litz wires is much more electrically efficient compared to both conventional armature arrangements and armature arrangements comprising Litz wires wherein the armature arrangement is maintained at a temperature above 77 Kelvin. The present arrangement integrates these two factors synergistically. The arrangement is highly electrically efficient and is capable of providing electrical current densities in an electric machine used for propulsion that have not previously been possible.

In an example, the armature arrangement experiences total current losses of 0.6% or below of the electric machine total input power. The power loss (which is related to the current loss) in the arrangements herein are associated with Eddy currents and conduction. As such, the present arrangement which closely controls and strongly reduces losses is highly electrically efficient.

"Current losses" may be understood to refer to the power loss associated with the various currents in the conductors (i.e. Litz wires). Specifically, current losses is the combination of Eddy current losses and power losses associated with conduction. In the present arrangement, an armature arrangement comprising a plurality of Litz wires, maintained at hyperconductive temperatures, has significantly reduced Eddy current losses, resulting in a resistivity that is about 100 times lower. Accordingly, the current density of the armature of the present invention is about 10 times larger (due to the inverse-square relationship between current density and resistivity), which is a significant increase over modern systems. This significant improvement is provided by the present arrangement by utilisation of the resistivity characteristics of Litz wires at the hyperconductive temperature region.

The arrangement disclosed herein is highly electrically efficient and therefore the losses experienced in the present arrangement is far lower than that experienced by present systems. By enabling greater current densities and also having low current losses, the present system is far more effective at generating motive force for use by a vehicle. In turn, this means the present system enables green solutions for problems such as aircraft flight that previously were not feasible.

In an example, the magnetic core is maintained at a temperature of at least one of: 223 K or above; 77 K or above; or 77 K to 223 K. Between 77 K and 223 K it has been found that electrical efficiencies can be balanced against cooling losses. In such an example, the core losses of the magnetic core may be higher, but the slots can have a slightly more compact shape. Around 77 K, superconductive phenomena can be utilised to provide high electrical efficiencies in the arrangement disclosed herein. The cryogenic source can be controlled to be at a temperature to provide a magnetic core temperature within any of the above ranges.

Use of a magnetic core has advantages over air cored machines, with specific advantages for the present invention. The magnetic core, which may be referred to as an "iron core" machine provides much higher magnetic field levels but also introduces iron loss, which reduces the gains available from such machines. In the present arrangement, the advantageous aspects of a magnetic core are maintained and used while the drawbacks are intelligently mitigated against.

During operation, the magnetic field from the rotor's permanent, or electromagnetic, magnets rotate. Simultaneously the armature currents create strong variable magnetic fields. These combining variable magnetic fields can result in additional Eddy current losses in the armature coils. In turn this may result in reduced efficiency, higher cooling burden, and therefore limiting the achievable current density. However, the magnetic core channels the magnetic flux around and away from the armature coils, reducing the induced Eddy currents therefrom and hence the losses. In essence, the magnetic stator core is advantageously used herein to shield the armature coils. This is a result of the difference in magnetic permeability between the core used herein and air (of the order of $10^3$). As such, the magnetic core directly contributes to the extremely high current density provided by the electric machine disclosed herein, despite also providing some electrical inefficiencies.

As mentioned above, the magnetic core may be maintained at a temperature of at least one of: 223 K or above; 77 K or above; or 77 K to 223 K. Between 77 K and 223 K it has been found that electrical efficiencies can be balanced against cooling losses. In such an example, the core losses of the magnetic core may be higher, but the slots can have a more compact shape. As will be explained, it is highly beneficial to the present invention to ensure that the magnetic core is maintained at a higher temperature relative to the armature arrangement to ensure it does not experience excessive losses. This is due to ferromagnetic materials at the hyperconductive temperatures of the armature arrangement having significantly reduced resistivity, which in turn results in increased Eddy currents and associated losses. The additional cooling that would be required to maintain hyperconductive temperatures for the magnetic core would be too significant, quickly depleting the cryogen budget for the system. Thus, it may be beneficial to maintain the magnetic core at a higher temperature both to prevent significantly increase core losses, and to shield armature coils.

To provide current densities of more than 25 $A/mm^2$ in the Litz wires, each of these aspects are balanced and controlled. In the present invention, such current densities are provided for the first time in an electric machine. The inclusion of a magnetic stator core is used herein to provide the present invention with the disclosed current densities. There is a synergistic effect of combining the shielding effect of the magnetic stator core and maintaining it at a higher temperature relative to the armature arrangement.

The magnetic core may comprise any ferromagnetic material; in an example, the magnetic core comprises at least one of iron, cobalt, nickel, or any combination thereof.

In an example, the stator may be maintained at a temperature of between 120 K and 150 K. This range has been found to be an advantageous balance between thermal management costs and reduced losses.

In an example, the stator is arranged in a vacuum. Such a vacuum insulates the stator from the cryogenic cooling of the armature. This enables the armature to be at a preferential colder temperature while also allowing the stator to be at a preferential, very different, warmer temperature. Given the stator is arranged in a vacuum to ensure a thermal barrier between it and the armature, and the vacuum barrier may be set in the airgap between the stator and the rotor. In this case, the airgap length may require to be slightly increased relative to conventional airgaps to accommodate the vacuum.

In another example, each separate armature coil may be enclosed within an individual vacuum tube that passes through the slots in the stator core, and wherein the stator core itself is not enclosed within a vacuum. Such individual vacuum tubes insulates the stator from the cryogenic cooling of the armature. Alternatively, the stator may be insulated from the cryogenic cooling of the armature in any suitable manner.

Despite the desire to maintain the magnetic core at a warmer temperature, it is still necessary to provide thermal management means to prevent excessive overheating of the magnetic core, which in turn would result in increased losses. Conventional means of cooling the magnetic core may be considered. In the case of the vacuum, alternative or additional cooling methods for the stator are considered. In an example, circulating air passes over the outer extremities of the magnetic core that is not situated within the vacuum and cools it. In another example, the electric machine comprises a fluid arranged in thermal communication with the magnetic core, the fluid is arranged to remove thermal energy from the magnetic core. In this way, the core may be maintained as a warmer temperature without experiencing runaway heating.

In an example, the electric machine comprises a fluid jacket arranged to hold the fluid in thermal communication with the magnetic core. This ensures strong thermal communication between the fluid and the magnetic core thereby improving the performance of the fluid in maintaining the warmer environment of the magnetic core from the cryogen.

In an example, the fluid is water. Water has a high thermal heat capacity and is therefore highly effective at performing such a thermal management function. Alternatively, the fluid may be any liquid or gas suitable for the purpose of cooling the stator.

In an example, the electric machine has a power rating in excess of 1 MW.

In an example, the armature comprises aluminium. Aluminium has been found to be an effective conductor for the arrangement disclosed herein. High purity aluminium has been found to be particularly effective. High purity aluminium may have a purity of 99.99% or more. In an example, the armature comprises copper. High purity copper has been found to be particularly effective. High purity copper may have a purity of 99.99% or more. In an example, the armature comprises silver. High purity silver may have a purity of 99.99% or more.

Viewed from another aspect there is provided an aircraft comprising the electric machine of any of the above aspects or examples.

In an example, the cryogen source is arranged in the aft portion of a fuselage of the aircraft. The aft portion is an advantageous place for such storage due to the shape and temperature of the fuselage during flight. Furthermore, typically such an area is not in use in an aircraft.

## Brief Description of the Drawings

One or more embodiments of the invention will now be described, by way of example only, and with reference to the following figures in which:

Figure 1 shows a schematic of an electric machine according to an example of the present invention;
Figure 2 shows a schematic cross-sectional view of an electric machine according to an example of the present disclosure;
Figure 3 shows a schematic cross-sectional view of an insulation arrangement for use in cryogenic systems;
Figure 4 shows a schematic perspective view of a coil inside a containment vessel;
Figure 5 shows a schematic cross-sectional view of a cryocooled motor arrangement according to an example of the present disclosure;
Figure 6 shows a schematic cross-sectional view of a cryocooled motor arrangement according to an example of the present disclosure; and,
Figure 7 shows a schematic cross-sectional view of a cryocooled motor arrangement according to an example of the present disclosure.
Figure 8 shows a schematic cross-sectional view of a cryocooled motor arrangement according to an example of the present disclosure.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The invention is further described with reference to the following examples. It will be appreciated that the invention as claimed is not intended to be limited in any way by these examples.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims, and that other embodiments may be utilised within the scope of the claimed invention.

## Detailed Description

An invention described herein relates to generating propulsion for a vehicle via an electrical machine. A particular electric machine disclosed herein has very high current density to provide greater propulsion from the electric machine. The generation of propulsion relates to current density and current losses. The system disclosed herein is highly efficient, combining stable use of high current density alongside minimising current losses. The electric machine of the present disclosure provides a current density in the armature arrangement of around more than 25 A/mm$^2$. In some examples, the present disclosure provides a current density in the armature arrangement of around more than 40 A/mm$^2$

The present invention provides a number of inventive strategies that provide an electric machine that is able to provide far greater electrical efficiencies than previous systems. The use of specific materials, dimensions, cryogens and thermal control has been found to further improve the efficiency of the main arrangement disclosed herein.

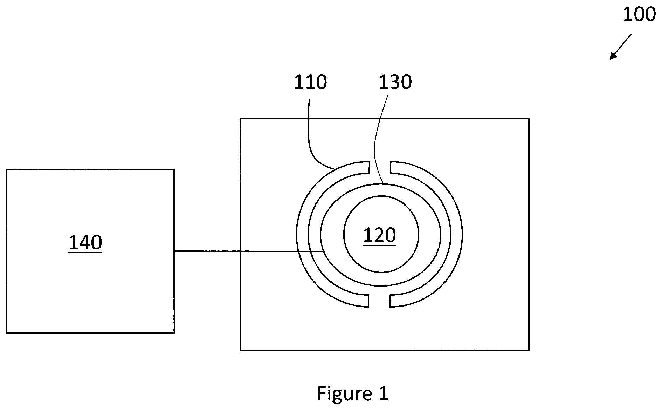

Referring now to Figure 1, there is shown an electric machine 100 comprising stator 110 comprising a magnetic core. The electric machine 100 further comprises a rotor 120. The electric machine 100 further comprises an armature arrangement 130 and a low temperature source 140 arranged to provide a low temperature to the armature arrangement 130. During operation of the electric machine 100, the armature arrangement 130 provides a current density of more than 25 A/mm$^2$. In an embodiment, the present arrangement has been shown to provide a current density of more than 40 A/mm$^2$. In examples, the present arrangement has been shown to provide current densities from around 50 A/mm$^2$ to 100 A/mm$^2$. Such current densities have not been provided before by an electric machine with the present construction. As such, this is a clear forward step over that which has been previously provided.

The stator 110 comprises a magnetic core that may be mainly formed of iron or the like. The stator 110 may have a series of slots in it between stator teeth. The stator 110 may a series of phase A, B and/or C coils in the slots. The magnetic core may additionally or alternatively be formed from cobalt or nickel or the like. The core may or may not be laminated.

The rotor 120 may be formed of an arrangement of elements providing either reluctance variation or a magnetic flux, or both. The rotor 120 may comprise permanent magnets with their own magnetic flux, which provide a torque force to the rotor in response to a time-varying magnetic field produced by the armature arrangement causing a motive force thereupon. Alternatively, the rotor 120 may comprise electromagnets. The rotor may comprise any ferromagnetic material, such as iron.

The armature arrangement 130 comprises a plurality of Litz wires. Litz wires may have a number of filaments that are wound together along an axis. The filaments may be twisted along the axis. A Litz wire may be such a bundle wherein the strands are insulated from one another. Each of the wires is an electrical conductive member. Use of Litz wires therefore decreases significantly the production of Eddy current losses due to the isolation of each electrically conductive element within the Litz wire.

The low temperature source 140 according to the invention is a cryogen source 140 arranged to provide a cryogen to the armature arrangement 130. The cryogen source 140 may be a container that contains a cryogen. Alternatively, the cryogen source 140 may contain materials that provide a cryogen. In an example, the cryogen source 140 is a source of at least one of hydrogen, neon, helium, or nitrogen. The terms cryogen source and low temperature source may be used interchangeably below, the machine does not require cryogenic temperatures per se, rather low temperatures. The low temperature source 140 may have one or more stages. One of the stages may be cryogenic stage (e.g. at a temperature of 20K) while another may not be a cryogenic stage (e.g. at a higher temperature).

In an example, the low temperature source may also be a conductive cooling source that uses conduction and a mechanically-cooled cryogenic heat sink. Such an arrangement may also provide cryogenic cooling to the armature arrangement. In an example, the cryogen source arranged to provide a cryogen may be a cryogenic cooling source arranged to provide cryogenic cooling.

Such examples of a cryogen are advantageous by virtue of the temperatures at which they are able to maintain the armature arrangement 130. Hydrogen may be a liquid at around 20 K at atmospheric pressure. Neon may be gas at around 30 K. As such gaseous neon and liquid hydrogen may provide a similar cooling effect for reasonably low temperatures. Helium may be a gas to below 5 K. Therefore, as for neon, gaseous helium may be sufficient for cooling of the armature 130 as described herein. Therefore, use of gaseous neon and helium allow for machines to be operated at around 30 K to around 40 K, or around 30 K to around 45 K. The cryogen may therefore be a gas or a liquid. The armature is preferably maintained at a temperature below 77 K.

In an example, the cryogen is at a temperature of below 77 Kelvin arranged to maintain the armature arrangement 130 at a temperature of below 77 Kelvin. Other advantageous temperature ranges include maintaining the cryogen at a temperature of below 60 K. High temperature superconductors may operate at around up to 80 K, with 120 K presently as an upper limit.

In an example, the magnetic core is maintained at a temperature of at least one of: 223 K or above; 77 K or above; or 77 K to 223 K. These regions may be described as near ambient and higher temperatures, hyperconductive temperatures to higher temperatures and between hyperconductive and near ambient temperatures. In a preferred example, the magnetic core is not hyperconducting rather the armature is hyperconducting. Cooling the core significantly (e.g. to hyperconducting temperatures) may lead to losses as explained herein. Cooling the armature has been found to be advantageous for electrical efficiency gains.

The armature arrangement 130 may contain a large number of Litz wires. In an example, each of the plurality of Litz wires comprises a plurality of Litz strands. The number of Litz strands may be between 50 to 5000 for each of the plurality of Litz wires. The strands are the filaments within each Litz wire that are electrically insulated from one another and bundled together to form a Litz wire. Increasing the number of strands increases the overall electrical current that can be transported in the Litz wire, however the construction complexity increases.

It has been found that the range herein presents an advantageous balance between these factors.

In an example, the Litz strands have a diameter in a diameter range of between 0.05 mm to 1 mm. The diameter range of the Litz strands presents a further balance. The greater the diameter, the easier the construction and the greater the amount of current any one strand can carry. In contrast, narrow strands improve the reduction of Eddy currents in the system and therefore improves electrical efficiency by decreasing losses. It has been found that the range herein presents an advantageous balance between these factors.

The range disclosed above corresponds to a particularly effective operating frequency of around 150 Hz to around 10 kHz. Accordingly, the ranges disclosed above corresponds to a resistivity of around $1 \times 10^{-9}$ $\Omega$m to around $2 \times 10^{-10}$ $\Omega$m. While other ranges are possible, it has been found that such ranges are highly effective in the present arrangement for providing extremely high current densities.

This therefore is related to a reasonable range of applications for electric machines and in particular is effective for use in aircraft propulsion machines. Furthermore, the range for resistivity noted above has been found to be highly effective as being in a hyperconductive region.

In an example, the armature arrangement 130 experiences current losses of 0.6% or below of the electric machine total input power. In an example, the total Litz wire current losses in the electric machine is around 0.6%. The upper limit on losses is related to the thermal budget which ultimately depends on hydrogen flow rate (which in an example arrangement is related to potential fuel cell and motor power) and also fuel cell and motor efficiencies.

For the example of a fuel cell stack, a limitation of a standard design is overcoming cooling of the electric machine without introducing costly and heavy additional apparatus. In one example solution, coupling between the fuel cell stack and the electric machine prove a beneficial and symbiotic relationship. For the example of a hydrogen-fuelled fuel cell, the fuel cell stack provides electric power to the electric machine, while the hydrogen cools the electric machine before being used in the fuel cell stack itself.

The hydrogen used to cool the electric machine may not be vaporised at rate higher than the hydrogen flow rate used to generate sufficient electrical power to be consumed by the electric machine. Thus, the current losses in the hyperconductively cooled stator windings may be below 0.6% to meet this requirement. When utilised in the arrangement of the present invention, a minimum value of motor efficiency of more than 99% is provided. This can be understood by considering the following equation for motor efficiency:

$$\eta_{motor} = 1 - \frac{L_{vap}}{\eta_{comb} H_{comb}}$$

where $\eta_{motor}$ is motor efficiency, $L_{vap}$ is heat of vaporisation of hydrogen, $H_{comb}$ is combustion enthalpy of hydrogen, and $\eta_{comb}$ is combustion efficiency (in this instance referring to efficiency of converting chemical energy of the hydrogen into electrical energy).

Given that the heat of vaporisation of hydrogen is very low relative to the combustion enthalpy of hydrogen - and given combustion efficiency of fuel cells is higher compared to conventional gas turbines - it can be seen that the motor efficiency is to be maintained higher than 99% to ensure vaporised cooling of the electric machine does not outweigh electricity generation.

Specifically, the arrangements disclosed herein have particularly high current density handling alongside particularly low total current loss. This allows for the present arrangement to have overall a far greater output than previous electrical arrangements. For medium speeds, the cryogenic machine described herein is particularly advantageous above around 750 kW of input power. The present arrangement is similarly advantageous for powers of around 1 MW and above. Medium speeds in this context correspond to the electric machine operating at around 5,000 to 10,000 rpm. At such medium speeds, a preferred torque is a balance between output torque and associated losses, such that the present electric machine is particularly power dense and efficient. The electric machine may operate at speeds above 10,000 rpm.

The Litz wire strands may be made of aluminium or copper. The Litz wire strands may be made of high purity aluminium or copper. While these materials are advantageous due to electrical properties at low temperatures, the Litz wire strands may comprise any suitable material.

In an example, the stator 110 is arranged in a vacuum. The whole stator 110 may be held in a vacuum to insulate the stator 110 from the cryogenic cooling applied to the armature arrangement 130. This vacuum also encompasses the magnetic core of the electric machine 100. The vacuum is preferably contained by a non-magnet tube placed in the airgap.

In an example, the arrangement comprises a fluid arranged in thermal communication with the magnetic core. The fluid is arranged to provide thermal energy to the magnetic core. In use, the thermal capacity of the fluid is arranged to maintain the temperature of the magnetic core despite indirect cooling from the cryogen acting primarily on the armature arrangement 130. In this way, the fluid is arranged to "pump" out iron losses from within the vacuum - this comes from, as mentioned above, an aim of reducing iron losses in an iron-cored machine by increasing the temperature of the iron to increase the resistivity of the iron. This is counter intuitive to the use of low temperatures to improve electrical efficiencies for, say, the armature arrangement.

Specifically, while the armature arrangement 130 is cooled by the cryogen source 140, the fluid (not the cryogen) prevents the magnetic core from being cooled significantly by the cryogen source 140. In this way, the thermal heat capacity of the fluid may inhibit cooling of the magnetic core. The fluid may be a liquid or a gas. In particular, the air flow from the nacelle is advantageous for use in this arrangement as this is already reasonable high thermal energy fluid that can be utilised for additional electrical efficiencies in the present arrangement. In an example, the fluid may be held in a fluid jacket to increase the thermal conductivity between the fluid and the magnetic core. In a specific example, the fluid may be a liquid such as water or the like with a high thermal capacity. Alternatively, the liquid may be a high thermal capacity liquid with a below 0°C freezing point so that the liquid is less likely to freeze during use. Such a liquid provides more robust protection against the colder locations of the arrangement such as within close thermal communication of the cryogen from the cryogen source 140. Electrical efficiencies of cooling can be provided to the armature while the core (which may be made of iron) is maintained at a higher temperature to avoid too much heat generation due to AC induction and magnetic hysteresis. The stator may be cooled using air flow along the nacelle.

In an example, the electric machine has a power rating in excess of 1 MW. In an arrangement, some clearance may be advantageous in the slots and ends of the stator for the cooling system and therefore the arrangement is particularly well suited for power ratings above 750 kW in medium speed machines (which may be around 5,000 to 10,000 rpm).

In an example, the armature arrangement comprises aluminium. It has been found that high purity aluminium is particularly effective for the arrangement disclosed herein.

The armature arrangement, also referred to as the motor coil, may be formed of other materials with similar properties such as niobium-titanium, high temperature superconductor, or magnesium diboride. Such options offer utilising superconducting properties where an electrical resistance of effectively zero can provide extremely high electrical efficiencies. Such materials however have relatively low thermal conductivity. Furthermore, while superconductors exhibit extremely low DC losses, there are significant AC losses associated with their use.

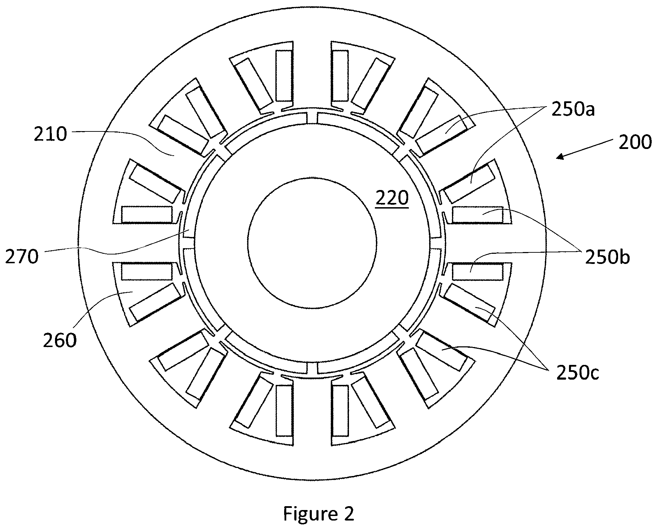

Referring to Figure 2, there is shown a schematic cross-sectional view of an electric machine 200. The machine 200 has a stator 210. The machine 200 also has a rotor 220. The rotor 220 is located centrally within the stator 210. As shown in the example of Figure 2, the stator 210 includes a series of phase A, B and/or C coils 250a, 250b, 250c in an arrangement of slots 260. The arrangement of slots 260 may be arranged between stator teeth. The stator 210 comprises a magnetic core that may be formed (in part or in full) of iron or the similar materials. The stator may comprise a three-phase arrangement as shown in Figure 2; alternatively, the stator may comprise any number of phases. Similarly, the rotor may comprise any suitable number of poles.

The rotor 220 may be formed of an arrangement of elements providing either reluctance variation or a magnetic flux, or both. As way of an example, the rotor 220 may comprise surface-mounted permanent magnets 270 with their own magnetic flux, which provide a torque force to the rotor 220 in response to a time-varying magnetic field produced by the armature arrangement (e.g. of Figure 1) causing a motive force thereupon. Alternatively, the rotor 220 may comprise electromagnets. Other rotors can be used in the arrangement disclosed herein.

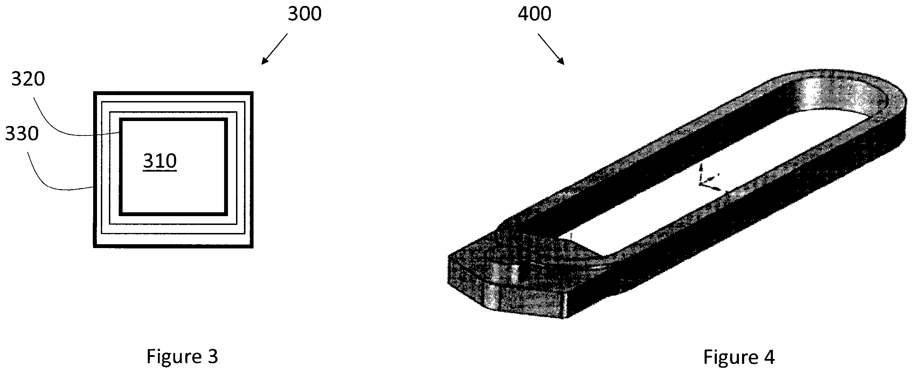

Referring to Figure 3, there is shown a thermal insulation arrangement 300 for use in a cryogenic machine. The arrangement 300 has a cryo area 310 around which components of the insulation arrangement can be arranged. The arrangement 300 comprises two vessels in-between which a high quality vacuum is maintained. The internal vessel 320 is located inwardly of the external vessel 330. Inside the arrangement 300 is a cryo area 310 maintained at a low temperature. Outside of the external vessel 330 is a temperature region that may be ambient or otherwise non-low temperature. Between the internal vessel 320 and the external vessel 330 is a vacuum and multiple layer insulation, which may be referred to as a radiation shield. Radiation heat transfer is reduced in this region by arranging several parallel layers of thin reflective material (multilayer insulation, MLI). In such an arrangement, the armature can be cooled to cryogenic temperatures without being thermally coupled to the stator core.

Referring to Figure 4, there is shown a perspective view of a coil inside a containment vessel 400. The vessel 400 may contain ports for providing cryogen intake and outflow. The coil may be arranged in a "racetrack" form. The "racetrack" form may be broadly that of a discorectangle.

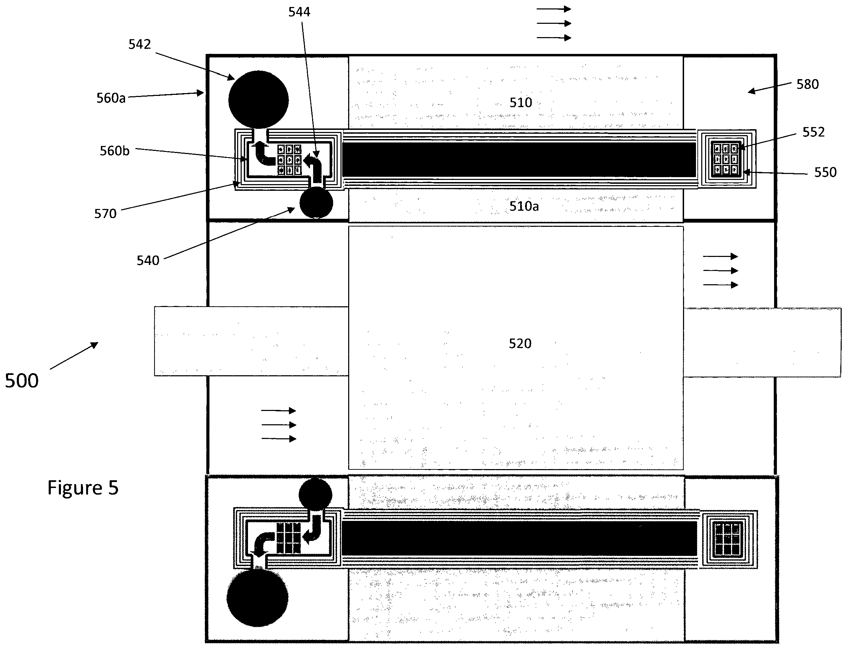

Figure 5 shows a schematic cross-sectional view of a cryocooled motor arrangement 500 wherein the stator iron 510 is maintained at ambient temperature and wherein the coils 550 are cryocooled. The external vessel 560a surrounds the entire stator 510, which lies in a vacuum 580. This arrangement provides a high electrical efficiency. The arrangement shown in Figure 5 has at least one cryogen distributor 540 for cryogen fluid circulation 544 within at least one internal vessel 560b. This leads to a cryogen collector 542. The arrangement has a stator iron 510 and a wedge 510a within which the stator slot is located. The coil 550 is shown as comprising Litz wire 552. There is air shown by arrows in Figure 5. The air is circulating. The air cools the rotor. The air also cools the stator. The stator is maintained at a temperature which may be between around 200 K to around 320 K or around 223 K to around 313 K. Several layers of multiple layer insulation (MLI) insulation 570 is arranged adjacent to the internal vessel 560b and within the vacuum.

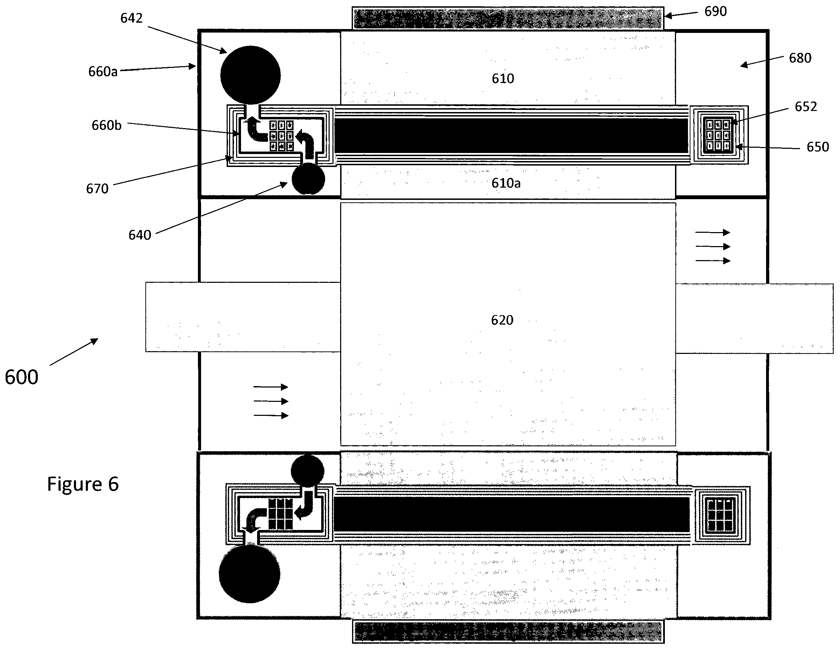

Figure 6 is a schematic cross-sectional view of a cryocooled motor arrangement 600, similar to that shown in Figure 5. In the example of Figure 6, the arrangement also comprises an external jacket 690 for removing heat from the stator iron 610 into a fluid. The external jacket 690 is located adjacent to the stator iron 610 and external to the vacuum 680. The external jacket 690 may be a fluid jacket. The fluid may be water. The fluid may be a water and glycol mix.

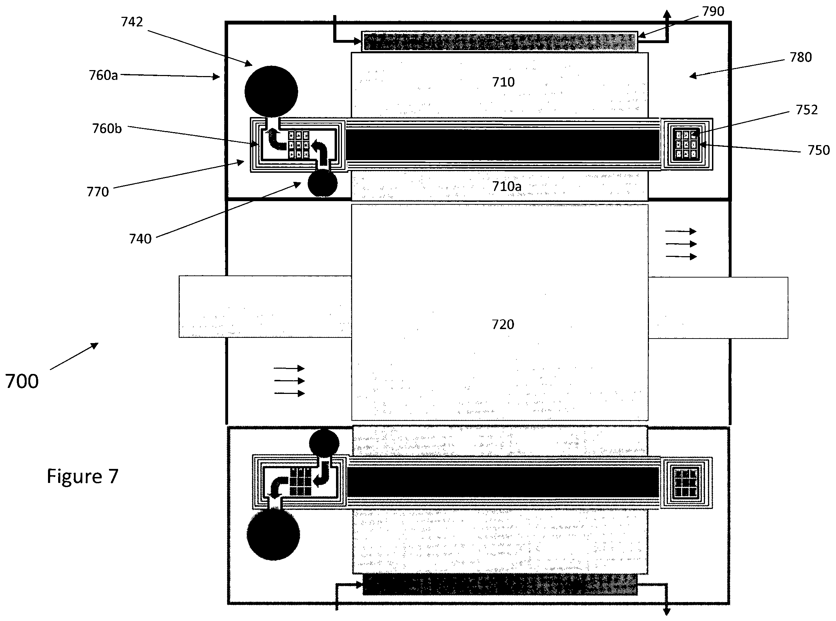

Figure 7 is a schematic cross-sectional view of a cryocooled motor arrangement 700, similar to that shown in Figure 6. In an example of Figure 7, the arrangement comprises an internal jacket 790 for removing heat from the stator iron 710 into a fluid. The internal jacket 790 is located adjacent to the stator iron 710 and within the external vessel 760a containing the vacuum 780. Heat will thereby be extracted, in use, from the stator iron 710 by circulating the fluid in the internal jacket 790. The internal jacket may be a fluid jacket 790. The fluid may be water. The fluid may be a water and glycol mix.

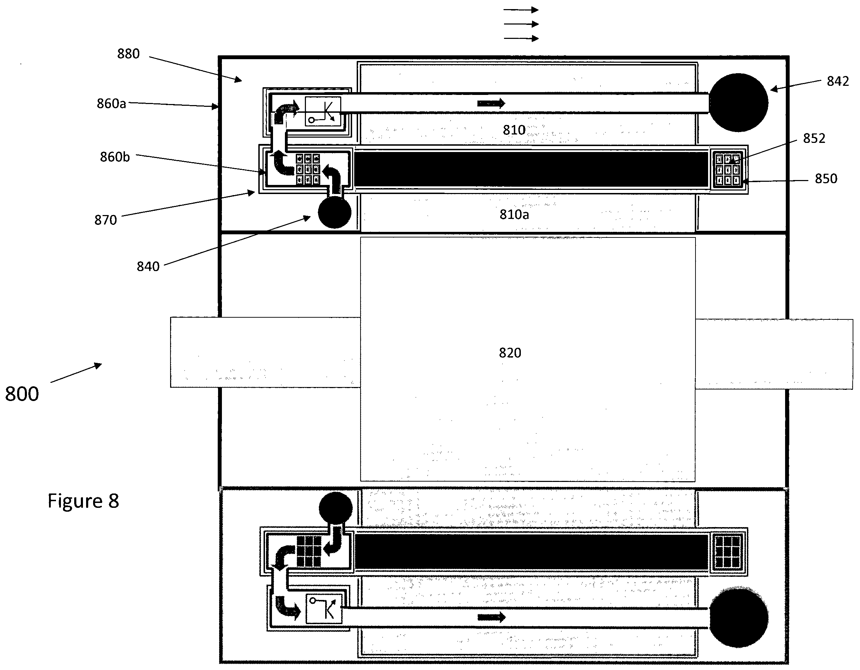

Figure 8 shows a cryocooled motor arrangement 800 in which the stator iron 810 is maintained at an "intermediate" temperature, a temperature between ambient and the temperature of the coils (cooled). In an example such as the one shown in Figure 8, part of the MLI insulation 870 can be moved out of the stator slots, yielding shorter teeth and a lighter construction. This may be advantageous from the viewpoint of generating lift with the electrical machine.

The example of Figure 8 is a schematic cross-sectional view of a cryocooled motor arrangement 800, similar to that shown in Figure 5. The example shown in Figure 8 has a cryogen distributor 840 at 25 K. Depending on the chosen cryogen, this may be a liquid or a gas. The cryogen distributor may be at around 20 K to 30 K or so. Where the cryogen was a liquid at the distributor 840, as the cryogen travels, the cryogen may become a gas (or remain as a liquid) with a temperature of around 25 K to around 30 K. The cryogenic fluid may then interact with power electronics which are at around 80 K. The power electronics may be around 70 K to 90 K. The cryogen then travels through a portion of the stator 810, maintaining the stator at around 120 to around 150 K. The example of Figure 8 also has a cryogen collector 842 for collecting gas which may be at a temperature of around 150 K. The cryogen collector may be at a temperature of around 140 K to around 170 K. Lower temperatures may be used for additional electrical efficiency.

In an example, the power electronics may include any means suitable for modulating a DC current into an AC current, such as an inverter. This is especially suitable for converting DC power from a fuel cell stack into AC power suitable to power the electric machine of the present invention. Such power electronics must be maintained at a temperature higher than that of the armature arrangement, but at a close enough temperature to prevent large thermal gradients in connecting wires. In an example, power electronics have been found to be particularly efficient at a temperature between 80 K and 110 K. One method of maintaining a reasonable temperature gradient is by using connecting wires that are relatively short. Such an arrangement may reduce or prevent overvoltage in the coils during the switching process. The electric machine of the present invention may comprise an integrated motor-inverter, thus utilising relatively short connecting wires.

By reducing the stator core to an intermediate temperature, the radiation heat transmitted by the stator core is significantly reduced - in an example, a reduction of stator core temperature from 300 K to 150 K is equivalent to a 16 times reduction in the heat transferred by radiation, since radiation energy is proportional to absolute temperature to the power of four (Stefan-Boltzmann law). Thus, in the embodiment of Figure 8, by lowering the temperature of the stator core to an intermediate temperature, less MLI is required to protect the armature arrangement from radiation energy through the vacuum. In this embodiment, the stator core may be covered by some thin MLI to improve stability of its temperature.

In the present embodiment, the crycooling circuit for is likely pressurised. For the example where the cryogen is hydrogen, the boiling temperature of hydrogen at ambient pressure is 21 K. It may be beneficial to maintain the cryogen source in a pressurised environment so that the boiling temperature is increased relative to its boiling temperature at ambient pressure. The armature arrangement may be maintained at a slightly higher temperature than the cryogen source at the cryogen distributor. In an example, the armature arrangement is at a temperature of around 30 K to 40K providing a sufficient thermal gradient for heat to flow out of the coils and into the cryogen. In an example, around 35 K is considered a suitable temperature for maintaining the armature arrangement - the skilled individual would appreciate that, for any cryogen source that can be maintained at a temperature sufficiently lower than 21 K, any temperature for maintaining the armature arrangement below 35 K is suitable.

In an example, by means of this technique an aircraft propulsion motor of more than 1 MW of power, specific power of at least 15 kW/kg and efficiency above 99% can be achieved.

The systems disclosed herein have clear advantages associated with them in terms of providing propulsion. The systems can ultimately provide much greater thrust than in current state of the art systems used in propulsive arrangements. In particular, the systems disclosed herein provide a much higher current density than was previously possible in electric machines. The system of the present disclosure therefore makes use of electric machines more reasonable in modern propulsive systems and therefore encourages use of such machines. That these machines utilise more environmentally friendly fuels is a further advantage over modern combustion systems for propulsion.

Although the electric machines disclosed have mostly been described in terms of aircraft, other vehicles such as spacecraft, marine vessels/ships and submarines or the like may also use such electric machines as described herein. A vehicle may or may not carry a cryogen or low temperature source for other purposes such as generation of electrical power, but still benefit from the arrangement disclosed herein. Although, the cryogen may be carried for other reasons, integration of the cryogen into the presently disclosed systems would not be mechanically intensive. As such, the disclosed systems would be advantageously provided in such vehicles. Any vehicle which might be propelled by an electric machine such as that described herein would benefit from use of the systems disclosed herein. A vehicle may include an automobile, an amphibious craft, an aircraft or the like.

Similarly, the cooling could in principle be provided by electro-mechanical means. Superconducting vehicles have been shown to be viable with mechanical coolers. As such, any vehicle may benefit from use of the electric machine disclosed herein.

The iron core rotor in the above description may be a conventional permanent-magnet iron-cored rotor.

The system disclosed herein might be advantageously used to provide propulsion in a vehicle or system which may benefit from a system that can provide high output power from an electric machine using greener fuels. The system presented herein is also compact and lightweight thereby providing additional advantages in terms of efficiencies from weight and space savings. In the specific examples used herein the AC and DC loss contribution of the armature has been carefully balanced to achieve the least total loss. In an example, very low loss has been found for 0.4 to 0.45A/strand with strands of 0.1 mm diameter, in the present arrangement such components can be used in the electric machine to provide current densities of around 55 A/mm$^2$.

Numerous advantages are provided by a production of thrust from electric machines rather than say via typical combustion engines. The production of water (or the like) in place of harmful gaseous emissions (NO, CO etc) has clear associated advantages. Furthermore, operation of the vehicle can occur with significantly reduced noise levels. In a particular example, landing phases for aircraft can occur with significantly reduced noise levels.

Applications for this system therefore may include automotive, space, domestic or commercial and so forth.

**Claims**

1. An electric machine (100) comprising:

   a stator (110) comprising a magnetic core;
   a rotor (120);
   an armature arrangement (130); and,
   a cryogen source (140) arranged to provide a low temperature to the armature arrangement, wherein the armature arrangement comprises a plurality of Litz wires,
   wherein the cryogen source is a cryogen source arranged to provide a cryogen to the armature arrangement
   wherein during operation the armature arrangement provides a current density of more than 25 A/mm$^2$.

2. An electric machine according to claim 1, wherein the cryogen source is a source of at least one of hydrogen, neon, helium or nitrogen.

3. An electric machine according to claim 1 or 2, wherein the cryogen is at a temperature of below 77 Kelvin arranged to maintain the armature arrangement at a temperature of below 77 Kelvin.

4. An electric machine according to any of claims 1 to 3, wherein each of the plurality of Litz wires comprises a plurality of Litz strands, the number of Litz strands being between 50 to 5000 for each of the plurality of Litz wires.

5. An electric machine according to claim 4, wherein the Litz strands have a diameter in a diameter range of between 0.05 mm to 1 mm.

6. An electric machine according to any of claims 1 to 5, wherein the plurality of Litz wires has a resistivity of $1\times10^{-9}$ $\Omega$m or below.

7. An electric machine according to any of claims 1 to 6, wherein the armature arrangement experiences current losses of 0.6% or below of the electric machine total input power.

8. An electric machine according to any of claims 1 to 7, wherein the magnetic core is maintained at a temperature of at least one of:

   223 K or above;
   77 K or above; or
   77 K to 223 K.

9. An electric machine according to any of claims 1 to 8, wherein the stator is arranged in a vacuum.

10. An electric machine according to any of claims 1 to 9, further comprising a fluid arranged in thermal communication with the magnetic core, the fluid arranged to provide thermal energy to the magnetic core.

**11.** An electric machine according to claim 10, further comprising a fluid jacket arranged to hold the fluid in thermal communication with the magnetic core.

**12.** An electric machine according to claim 11, wherein the fluid is water.

**13.** An electric machine according to any of claims 1 to 12, wherein the electric machine has a power rating in excess of 1 MW.

**14.** An electric machine according to any of claims 1 to 13, wherein the armature arrangement comprises aluminium.

**15.** An aircraft comprising the electric machine of any of claims 1 to 14.

**16.** The aircraft of claim 15, wherein the cryogen source is arranged in the aft portion of a fuselage of the aircraft.

**17.** A vehicle comprising the electric machine of any of claims 1 to 14.


**Patentansprüche**

**1.** Elektrische Maschine (100), umfassend:

   einen Stator (110), umfassend einen Magnetkern;
   einen Rotor (120);
   eine Ankeranordnung (130); und
   eine Kryogenquelle (140), die dazu ausgelegt ist, der Ankeranordnung eine niedrige Temperatur bereitzustellen, wobei die Ankeranordnung mehrere Litzendrähte umfasst,
   wobei die Kryogenquelle eine Kryogenquelle ist, die dazu angeordnet ist, der Ankeranordnung ein Kryogen zuzuführen,
   wobei während des Betriebs die Ankeranordnung eine Stromdichte von mehr als 25 A/mm$^2$ bereitstellt.

**2.** Elektrische Maschine nach Anspruch 1, wobei die Kryogenquelle eine Quelle für mindestens eines von Wasserstoff, Neon, Helium oder Stickstoff ist.

**3.** Elektrische Maschine nach Anspruch 1 oder 2, wobei das Kryogen eine Temperatur von unter 77 Kelvin aufweist und so angeordnet ist, dass es die Ankeranordnung auf einer Temperatur von unter 77 Kelvin hält.

**4.** Elektrische Maschine nach einem der Ansprüche 1 bis 3, wobei jeder der mehreren Litzendrähte mehrere Litzen umfasst, wobei die Anzahl der Litzen für jeden der mehreren Litzendrähte zwischen 50 und 5000 liegt.

**5.** Elektrische Maschine nach Anspruch 4, wobei die Litzen einen Durchmesser in einem Durchmesserbereich zwischen 0,05 mm und 1 mm aufweisen.

**6.** Elektrische Maschine nach einem der Ansprüche 1 bis 5, wobei die mehreren Litzendrähte einen spezifischen Widerstand von $1 \times 10^{-9}$ Ωm oder darunter aufweisen.

**7.** Elektrische Maschine nach einem der Ansprüche 1 bis 6, wobei die Ankeranordnung Stromverluste von 0,6 % oder weniger von der gesamten Eingangsleistung der elektrischen Maschine aufweist.

**8.** Elektrische Maschine nach einem der Ansprüche 1 bis 7, wobei der Magnetkern bei einer Temperatur von mindestens einem von Folgendem gehalten wird:

   223 K oder darüber;
   77 K oder darüber; oder
   77 K bis 223 K.

**9.** Elektrische Maschine nach einem der Ansprüche 1 bis 8, wobei der Stator in einem Vakuum angeordnet ist.

**10.** Elektrische Maschine nach einem der Ansprüche 1 bis 9, ferner umfassend ein Fluid, das in thermischem Kontakt mit dem Magnetkern angeordnet ist, wobei das Fluid dazu angeordnet ist, dem Magnetkern thermische Energie zuzuführen.

**11.** Elektrische Maschine nach Anspruch 10, ferner umfassend einen Fluidmantel, der dazu angeordnet ist, das Fluid in thermischem Kontakt mit dem Magnetkern zu halten.

**12.** Elektrische Maschine nach Anspruch 11, wobei das Fluid Wasser ist.

**13.** Elektrische Maschine nach einem der Ansprüche 1 bis 12, wobei die elektrische Maschine eine Nennleistung von mehr als 1 MW aufweist.

**14.** Elektrische Maschine nach einem der Ansprüche 1 bis 13, wobei die Ankeranordnung Aluminium umfasst.

**15.** Luftfahrzeug, umfassend die elektrische Maschine nach einem der Ansprüche 1 bis 14.

**16.** Luftfahrzeug nach Anspruch 15, wobei die Kryogenquelle im hinteren Teil des Rumpfes des Luftfahrzeugs angeordnet ist.

**17.** Fahrzeug, umfassend die elektrische Maschine nach einem der Ansprüche 1 bis 14.

**Revendications**

**1.** Machine électrique (100) comprenant :

> un stator (110) comprenant un noyau magnétique ;
> un rotor (120) ;
> un agencement d'induit (130) ; et
> une source de cryogène (140) agencée pour fournir une basse température à l'agencement d'induit,
> dans lequel l'agencement d'induit comprend une pluralité de fils de Litz,
> dans lequel la source de cryogène est une source de cryogène agencée pour fournir un cryogène à l'agencement d'induit,
> dans lequel, pendant le fonctionnement, l'agencement d'induit fournit une densité de courant supérieure à 25 A/mm2.

**2.** Machine électrique selon la revendication 1, dans laquelle la source de cryogène est une source d'au moins un élément parmi l'hydrogène, le néon, l'hélium ou l'azote.

**3.** Machine électrique selon la revendication 1 ou 2, dans laquelle le cryogène est à une température inférieure à 77 Kelvin agencé pour maintenir l'agencement d'induit à une température inférieure à 77 Kelvin.

**4.** Machine électrique selon l'une quelconque des revendications 1 à 3, dans laquelle chacun de la pluralité de fils de Litz comprend une pluralité de brins de Litz, le nombre de brins de Litz étant compris entre 50 et 5000 pour chacun de la pluralité de fils de Litz.

**5.** Machine électrique selon la revendication 4, dans laquelle les brins de Litz ont un diamètre dans une plage de diamètres comprise entre 0,05 mm et 1 mm.

**6.** Machine électrique selon l'une quelconque des revendications 1 à 5, dans laquelle la pluralité de fils de Litz a une résistivité de $1x10^{-9}$ $\Omega$m ou moins.

**7.** Machine électrique selon l'une quelconque des revendications 1 à 6, dans laquelle l'agencement d'induit subit des pertes de courant de 0,6 % ou moins de la puissance d'entrée totale de la machine électrique.

**8.** Machine électrique selon l'une quelconque des revendications 1 à 7, dans laquelle le noyau magnétique est maintenu à une température d'au moins l'une parmi :

> 223 K ou plus ;
> 77 K ou plus ; ou
> 77 K à 223 K.

**9.** Machine électrique selon l'une quelconque des revendications 1 à 8, dans laquelle le stator est agencé sous vide.

**10.** Machine électrique selon l'une quelconque des revendications 1 à 9, comprenant en outre un fluide agencé en communication thermique avec le noyau magnétique, le fluide étant agencé pour fournir de l'énergie thermique au noyau magnétique.

**11.** Machine électrique selon la revendication 10, comprenant en outre une chemise de fluide agencée pour maintenir le fluide en communication thermique avec le noyau magnétique.

**12.** Machine électrique selon la revendication 11, dans laquelle le fluide est de l'eau.

**13.** Machine électrique selon l'une quelconque des revendications 1 à 12, dans laquelle la machine électrique a une puissance nominale supérieure à 1 MW.

**14.** Machine électrique selon l'une quelconque des revendications 1 à 13, dans laquelle l'agencement d'induit comprend de l'aluminium.

**15.** Aéronef comprenant la machine électrique selon l'une quelconque des revendications 1 à 14.

**16.** Aéronef selon la revendication 15, dans lequel la source de cryogène est agencée dans la partie arrière d'un fuselage de l'aéronef.

**17.** Véhicule comprenant la machine électrique selon l'une quelconque des revendications 1 à 14.

100

110    130

140    120

Figure 1

Figure 2

EP 4 376 266 B1

EP 4 376 266 B1

300

320

330

310

**Figure 3**

400

**Figure 4**

Figure 5

Figure 6

EP 4 376 266 B1

Figure 7

700

Figure 8

**EP 4 376 266 B1**

## REFERENCES CITED IN THE DESCRIPTION

**Patent documents cited in the description**

- EP 3627674 A